**Europäisches Patentamt**

**European Patent Office**

**Office européen des brevets**

(19)

(11) Veröffentlichungsnummer : **0 167 857**
**B1**

(12) # EUROPÄISCHE PATENTSCHRIFT

(45) Veröffentlichungstag der Patentschrift :
28.09.88

(21) Anmeldenummer : **85107176.1**

(22) Anmeldetag : **11.06.85**

(51) Int. Cl.⁴ : **C 07 C 69/38**, C 07 C 49/92,
C 07 F 7/00

(54) **Modifizierte Titan(IV)-acetylacetonate.**

(30) Priorität : 30.06.84 DE 3424189

(43) Veröffentlichungstag der Anmeldung :
15.01.86 Patentblatt 86/03

(45) Bekanntmachung des Hinweises auf die Patenterteilung : 28.09.88 Patentblatt 88/39

(84) Benannte Vertragsstaaten :
BE DE FR GB IT NL SE

(56) Entgegenhaltungen :
FR-A- 1 404 767
FR-A- 2 079 013
GB-A- 2 079 745

(73) Patentinhaber : **Hüls Troisdorf Aktiengesellschaft**
**Postfach 11 65**
**D-5210 Troisdorf (DE)**

(72) Erfinder : **Nestler, Heinz, Dr.**
**Rembrandtstrasse 73**
**D-5210 Troisdorf-Eschmar (DE)**
Erfinder : **Barfurth, Dieter**
**Adenauerstrasse 34**
**D-5210 Troisdorf-Spich (DE)**

## Beschreibung

Gegenstand der vorliegenden Erfindung sind Dialkoxytitan (IV)-acetylacetonate, die die bekannten typischen Eigenschaften dieser chelatisierten Titan-Verbindungen aufweisen, jedoch nicht die sonst übliche Rotfärbung besitzen.

Es ist bekannt, Titanchelate, insbesondere Dialkoxytitan (IV)-bis-acetylacetonate, die im folgenden auch als Titan-acetylacetonate bezeichnet werden, als Katalysator, Vernetzer oder Beschichtungsmaterial einzusetzen, wobei man sich insbesondere die gegenüber den Tetraalkyltitanaten, wie z. B. dem Tetraisopropyl-titanat, verringerte Reaktivität und die herabgesetzte Hydrolyseempfindlichkeit zunutze macht. Dies spielt hauptsächlich in den Fällen eine wichtige Rolle, in denen eine beabsichtigte katalytische oder vernetzende Wirkung in einem Gemisch von Komponenten nicht sofort nach deren Vermischung, sondern erst zu einem späteren Zeitpunkt, also nach einer gewissen Standzeit, eintreten soll. Als praktische Beispiele dafür können Flexodruckfarben auf Basis Nitrocellulose oder Tauchbäder auf Basis Titanacetylacetonat für die Feingußform-Herstellung gelten ; in jedem Fall soll die Aushärtung oder Vernetzung nicht im Vorratsgefäß erfolgen, wie das mit Tetraalkyltitanaten unzweifelhaft geschehen würde, sondern erst nach dem Verdrucken bzw. nach Aufbringen einer Schicht auf ein Modell.

Üblicherweise werden Titanacetylacetonate in Form einer ca. 75 %igen Lösung in dem den Alkoxigruppen des Chelats entsprechenden Alkohol, meist Isopropanol, eingesetzt, wie sie bei ihrer Herstellung aus einem Mol Tetraalkyltitanat und 2 Mol Acetylaceton anfallen. Der bekannteste Vertreter dieser Titanacetylacetonate ist das Diisopropoxytitan (IV)-bis-acetylacetonat.

Diese bekannten Titanacetylacetonate sind herstellungsbedingt mehr oder weniger rot gefärbt. Die intensiv rote Lösung ist für viele Anwendungsfälle gut brachbar (ein Einengen führt wegen orangefarbener Ausfällungen zu Handhabungsschwierigkeiten), bei anderen Verwendungen, z. B. bei der Formulierung weißer oder hellfarbener Flexodruckfarben, kann die Eigenfarbe jedoch deutlich stören.

Die einfache Konsequenz, bei der Herstellung den Acetylaceton-Zusatz auf geringfügig unter 2 Mol pro g-Atom Ti zu senken und damit zwar etwas an Stabilität des Chelats zu verlieren, dafür aber eine gelbe Lösung zu erhalten, führt nicht zu dauerhafter Abhilfe : nach einigem Stehen färbt sich die Lösung wieder rot, und es kann sogar zu Ausfällungen kommen. Verringert man den Acetylaceton-Zusatz zu stark, auf etwa 1,5 Mol oder darunter, so erhält man Titanat-Lösungen, die — zwar gelb und nicht rot — in ihrem Verhalten weitgehend demjenigen der reaktiven und hydrolyseempfindlichen Tetraalkyltitanate entsprechen.

Es bestand also die Aufgabe, Titanchelate aufzufinden, die die Eigenschaften der Titanacetylacetonate besitzen, jedoch nicht so intensiv gefärbt wie diese Chelate sind.

In Erfüllung dieser Aufgabe wurden nun Titanacetylacetonate gefunden, die dadurch gekennzeichnet sind, daß sie pro g-Atom Ti 0,05 bis 0,75 Mol eines Malonsäuredialkylester-Restes und [2- (0,05 bis 0,75)] Mol des Acetylacetonatrestes gebunden enthalten. Die neuen Titanchelate sind weiterhin gekennzeichnet als das Reaktionsprodukt von 1 Mol Tetraalkyltitanat mit 1,25 bis 1,95 Mol Acetylaceton und 0,75 bis 0,05 Mol Malonsäuredialkylester, bevorzugt mit 1,5 bis 1,75 Mol Acetylaceton und 0,5 bis 0,25 Mol Malonsäuredialkylester, wobei die Summe aus Acetylaceton und Malonester 2 Mol, bezogen auf 1 Mol Tetraalkyltitanat, beträgt. Als Obergrenze der Menge an Acetylaceton gilt der Wert, oberhalb dessen das Reaktionsprodukt rotfarben vorliegt, während der unterste beanspruchte Wert diejenige Chelatzusammensetzung markiert, bei der die technisch wichtigen Eigenschaften wie reduzierte Reaktivität und Wasserverträglichkeit gerade noch erkennbar sind.

Die neuen Titanchelate sind nur schwach gelb gefärbt und zeigen die gleiche geringe Hydrolyseempfindlichkeit wie die bekannten Titanacetylacetonate, obwohl Umsetzungsprodukte aus Tetraalkyltitanaten mit 1 bis 4 Äquivalenten Malonester stets Produkt(gemisch)e ergeben, die ebenso hydrolyseempfindlich sind wie das Ausgangstitanat selbst. Dies bedeutet, daß Malonester selbst als Komplexbildner bei Titanaten praktisch unwirksam sind.

Der erfindungsgemäße Ersatz des Acetylaceton-Rests durch den Malonsäurealkylester-Rest beeinflußt also die Hydrolyseunempfindlichkeit praktisch nicht ; andererseit wird die Hydrolyseempfindlichkeit der Umsetzungsprodukte von Malonsäurealkylestern mit Tetraalkyltitanat durch den teilweisen Ersatz des Malonsäurealkylesters durch Acetylaceton erheblich reduziert. Es ist also erfindungsgemäß weiterhin möglich, eine Chelatbildung bei der Umsetzung von Titanester mit Malonsäurealkylestern dadurch zu bewirken, daß bei der Herstellung ein Teil des Malonsäuredialkylesters durch Acetylaceton ersetzt wird.

Die neuen Titanchelate fallen aufgrund ihrer Herstellungweise als Lösungen in dem Alkohol an, der dem Alkylrest des eingesetzten Titanats entspricht. Prinzipiell ist es möglich, den Alkohol abzudestillieren und das Reinprodukt zu isolieren. Eine solche Isolierung ist jedoch wenig sinnvoll, da die neuen Chelate praktisch immer in Lösung eingesetzt werden.

Die als Ausgangsverbindungen zur Herstellung der neuen Verbindungen eingesetzten Tetraalkyltitanate können beliebige Vertreter dieser Gruppe sein, wobei hauptsächlich $C_1$-$C_6$-Alkyl- und bevorzugt Isopropyl- und Butyltitanat infrage kommen. In den neuen Verbindungen bleiben immer zwei Mol dieser Alkoxyreste pro g-Atom Titan an das zentrale Ti-Atom gebunden.

Unter Malonsäuredialkylestern sollen Verbindungen der Formel ROOC-CR'R'-COOR verstanden werden mit R = $C_1$- bis $C_4$-Alkyl und R' = H oder $C_1$- bis $C_4$-Alkyl, wobei die Alkylgruppen jeweils gleich

0 167 857

oder verschieden sein können.

Die Herstellung der beanspruchten Titanchelate geschieht in sehr einfacher Weise dadurch, daß man in einem geeigneten Reaktionsgefäß in vorgelegtes Tetraalkyltitanat die zur Umsetzung benötigten Mengen Acetylaceton und Malonester unter Rühren zudosiert. Durch die freiwerdende Reaktionswärme erhitzt sich dabei das Reaktionsgemisch auf etwa 70 bis 80 °C. Zur Vervollständigung der Reaktion wird das Gemisch noch etwa 1/2 Std. auf dieser Temperatur gehalten, wobei ggf. zusätzlich erwärmt wird. Das Titanchelat fällt dann als etwa 70 bis 80 %ige Lösung in dem Alkohol an, der durch Reaktion der Chelatbildner mit dem Ausgangs-Titanat freigeworden ist. Die Chelat-Lösung kann direkt als solche verwendet werden.

Es ist auch möglich, Lösungen des Tetraalkyltitanats vorzugsweise in dem dem Alkoxirest entsprechenden Alkohol als Ausgangsprodukt einzusetzen. Bei dieser Herstellungsart fallen entsprechend verdünntere Lösungen der neuen Chelate an, die für manche Anwendungen ebenfalls direkt eingesetzt werden können.

Die erfindungsgemäßen Titanchelate lassen sich bei all jenen Anwendungen einsetzen, bei denen bisher das bekannte, handelsübliche Titanacetylacetonat verwendet wird. Gegenüber diesem besitzen sie jedoch den Vorteil einer wesentlich weniger intensiven Färbung ; außerdem weisen sie eine noch gesteigerte Wasserverträglichkeit auf, wodurch unerwünschte Ausfällung von Titanoxidhydraten bei Vorhandensein oder Freiwerden von Wasser in einem Reaktionssystem noch wirksamer als bisher verhindert werden.

## Beispiel 1

Herstellung von Acetylaceton-Malonsäurediethylester-(1,75 : 0,25 : 1)-Titanchelat aus Isopropyltitanat

In einem 1 000 ml-Kolben, der mit Rührer, Thermometer, Tropftrichter und Rückflußkühler versehen ist, werden 284 g (1 Mol) Isopropyltitanat vorgelegt und über den Tropftrichter so mit einer Mischung aus 175 g (1,75 Mol) Acetylaceton (Pentandion-2,4) und 40 g (0,25 Mol) Malonsäurediethylester versetzt, daß die Temperatur der Reaktionsmischung nicht über 75 °C steigt. Nach beendeter Zugabe wird noch 30 Minuten bei 70 °C gerührt.

Erhalten wird eine hellgelbe, leicht bewegliche Flüssigkeit mit folgenden Kennzahlen :

Brechungszahl $n_D^{20}$ : 1,490 8
Viskosität (20 °C) : 8,0 mPa · s
Titandioxid-Gehalt : 16,0 %
Löslichkeit :
a) Wasser in Titanchelat : maximal 95 g $H_2O$ in 100 g Titanchelat
b) Titanchelat in Wasser : maximal 0,5 g Titanchelat in 100 g $H_2O$
c) in organischen Lösungsmitteln :
Isopropanol :
Ethylacetat :
Methylethylketon : } 10 %ige Lösung klar und mehrere Monate stabil
Heptan :
Toluol :
Methylenchlorid :

## Beispiel 2

Herstellung von Acetylaceton-Malonsäurediethylester-(1,50 : 0,50 : 1)-Titanchelat aus Isopropyltitanat

In einem 1 000 ml-Kolben, der mit Rührer, Thermometer, Tropftrichter und Rückflußkühler versehen ist, werden 284 g (1 Mol) Isopropyltitanat vorgelegt und über den Tropftrichter so mit einer Mischung aus 150 g (1,50 Mol) Acetylaceton (Pentandion-2,4) und 80 g (0,50 Mol) Malonsäurediethylester versetzt, daß die Temperatur der Reaktionsmischung nicht über 75 °C steigt. Nach beendeter Zugabe wird noch 30 Minuten bei 70 °C gerührt.

Erhalten wird eine hellgelbe, leicht bewegliche Flüssigkeit mit folgenden Kennzahlen :

Brechungszahl $n_D^{20}$ : 1,483 5
Viskosität (20 °C) : 8,5 mPa · s
Titandioxid-Gehalt : 15,6 %
Löslichkeit :
a) Wasser in Titanchelat : maximal 90 g $H_2O$ in 100 g Titanchelat
b) Titanchelat in Wasser : maximal 0,5 g Titanchelat in 100 g $H_2O$
c) in organischen Lösungsmitteln :

3

Isopropanol :
Ethylacetat :
Methylethylketon : } 10 %ige Lösung klar und mehrere Monate stabil
Heptan :
Toluol :
Methylenchlorid :

## Beispiel 3

Herstellung von Acetylaceton-Malonsäurediethylester-(1,25 : 0,75 : 1)-Titanchelat aus Isopropyltitanat

In einem 1 000 ml-Kolben, der mit Rührer, Thermometer, Tropftrichter und Rückflußkühler versehen ist, werden 284 g (1 Mol) Isopropyltitanat vorgelegt und über den Tropftrichter so mit einer Mischung aus 125 g (1,25 Mol) Acetylaceton (Pentandion-2,4) und 120 g (0,75 Mol) Malonsäurediethylester versetzt, daß die Temperatur der Reaktionsmischung nicht über 75 °C steigt. Nach beendeter Zugabe wird noch 30 Minuten bei 70 °C gerührt.

Erhalten wird eine hellgelbe, leicht bewegliche Flüssigkeit mit folgenden Kennzahlen :

Brechungszahl $n_D^{20}$ : 1,478 5
Viskosität (20 °C) : 7,5 mPa · s
Titandioxid-Gehalt : 15,1 %
Löslichkeit :
a) Wasser in Titanchelat : maximal 60 g $H_2O$ in 100 g Titanchelat
b) Titanchelat in Wasser : maximal 0,5 g Titanchelat in 100 g $H_2O$
c) in organischen Lösungsmitteln :
Isopropanol :
Ethylacetat :
Methylethylketon : } 10 %ige Lösung klar und mehrere Monate stabil
Heptan :
Toluol :
Methylenchlorid :

## Beispiel 4

Bestimmung der Reaktivität der nach Beispiel 1 bis 3 hergestellten neuen Titanchelate mit Nitrocellulose-Lösungen

Die Brauchbarkeit eines Titanchelats für den Einsatz z. B. als Flexodruckfarben-Additiv läßt sich durch eine einfache Prüfung mit einer Nitrocellulose-Lösung ermitteln, wobei in der Regel so verfahren wird, daß zu der Nitrocellulose-Lösung verschiedene Anteile des zu prüfenden Titanchelats zugegeben werden und die Wirkung des Zusatzes, z. B. Verdickung und Gelierung der Nitrocellulose-Lösung, beobachtet wird. In der nachstehenden Tabelle sind die Ergebnisse einer solchen Prüfung mit den nach Beispiel 1 bis 3 hergestellten erfindungsgemäßen Titanchelaten angegeben :

| Zugesetztes Titanchelat | Zusatz von 1 ml Titanchelat zu 10 ml einer 10 %-Lösung einer Nitrocellulose vom Typ... | |
|---|---|---|
| | Norm 30 A *) (alkohollösl.) | Norm 34 E **) (esterlösl.) |
| a) Titanacetylacetonat (Standardprodukt zum Vergleich) | keine Veränderung | keine Veränderung |
| b) Titanchelat nach Beispiel 1 | keine Veränderung | keine Veränderung |
| c) Titanchelat nach Beispiel 2 | leichte Verdickung | keine Veränderung |

*) Trockenwollegehalt 30 %
**) Trockenwollegehalt 34 %

Tabelle (Fortsetzung)

| Zugesetztes Titanchelat | Zusatz von 1 ml Titanchelat zu 10 ml einer 10 %-Lösung einer Nitrocellulose vom Typ | |
|---|---|---|
| | Norm 30 A *) (alkohollösl.) | Norm 34 E **) (esterlösl.) |
| d) Titanchelat nach Beispiel 3 | mäßige Verdickung | keine Veränderung |
| e) Acetylaceton-Malonsäurediethylester-(1:1:1)-Titanchelat | geliert n. 24 Std. | keine Veränderung |
| f) Acetylaceton-(1,5:1)- Titanchelat | geliert sofort | mäßige Verdickung |

*) Trockenwollegehalt 30 %
**) Trockenwollegehalt 34 %

Die Beispiele a), e) und f) dienen zu Vergleichszwecken. Alle Produkte wurden analog der im Beispiel 1 dargelegten Weise hergestellt ; nur das eingesetzte Verhältnis Acetylaceton : Titansäureester wurde geändert. Es betrug im Beispiel a) 2 : 1, im Beispiel f) 1,5 : 1 und im Beispiel e) 1 : 1, wobei zusätzlich noch 1 Mol Malonsäurediethylester eingesetzt wurde.

Die in der Tabelle angegebenen Nitrocellulose-Typen finden als Standard-Bindemittel in der Druckfarbenindustrie weite Verbreitung. Als brauchbar werden Additive angesehen, die bei der Type 30 A höchstens eine mäßige Verdickung bewirken.

Beispiel 5

Beschreibung der haftverbessernden Wirkung eines Zusatzes des neuen Titanchelats nach Beispiel 2 in einer Nitrocellulose-Druckfarbe

Zu einer Nitrocellulose-Druckfarbe, die 25 % Nitrocellulose des Norm-Typs 34 E *), gelöst in Ethanol-Ethylacetat, und Titandioxid als Weißpigment enthält, wurden 2 % des erfindungsgemäßen Titanchelats nach Beispiel 2 eingegeben und einige Minuten eingerührt. Mittels einer Filmziehspirale wurde die so modifizierte Druckfarbe in einer Naßschichtdicke von 12 µ auf koronavorbehandelte Polypropylenfolie aufgezogen und nach 60 Minuten Lufttrocknung 10 Minuten bei 60 °C im Umluftschrank nachgetrocknet. Anschließend wurde die Haftung der Druckfarbe auf dem Polyprolylen mittels Klebeband-Abriß ermittelt : Auf eine Fläche von ca. 4 cm² wurde ein Klebefilmstreifen (z. B. Tesafilm) aufgeklebt und in einem Ruck wieder abgezogen. Bei dieser Prüfung wurden 0 bis 10 % der Druckfarbe vom Untergrund abgerissen. Zum Vergleich betrug die Abrißquote bei Zusatz von 2 % handelsüblichen Titanacetylacetonats zur Druckfarbe 15-25 %.

*) Trockenwollegehalt 34 %, esterlöslich.

**Patentansprüche**

1. Dialkoxy-titan (IV)-acetylacetonate, dadurch gekennzeichnet, daß sie pro g-Atom Titan 0,05 bis 0,75 Mol eines Malonsäure-dialkylester-Restes an Stelle des Acetylacetonat-Restes enthalten, wobei der Malonsäure-dialkylester-Rest sich ableitet von Malonsäure-dialkylestern der Formel ROOC-CR'R'-COOH, in der R für gleiche oder ungleiche Alkylreste mit 1 bis 4 C-Atomen und R' für H oder R steht.

2. Verfahren zur Herstellung von Dialkoxy-titan (IV)-acetylacetonaten gemäß Anspruch 1, dadurch gekennzeichnet, daß man Tetra-alkyltitanate mit soviel Acetylaceton und Malonsäure-dialkylestern der Formel ROOC-CR'R'-COOH, bei der R für gleiche oder verschiedene Alkylreste mit 1 bis 4 C-Atomen und R' für H oder R steht, umsetzt, daß pro g-Atom Titan 1,25 bis 1,95, bevorzugt 1,5 bis 1,75 Mol, Acetylaceton und 0,75 bis 0,05, bevorzugt 0,5 bis 0,25 Mole, Malonsäure-dialkylester eingesetzt werden und die Summe aus der Anzahl Mole Acetylaceton und der Anzahl Mole Malonsäure-dialkylester 2 Mole pro g-Atom Titan beträgt.

## Claims

1. Dialkoxy-titanium (IV)-acetylacetonates, characterised in that they contain 0.05 to 0.75 mol of a malonic acid dialkyl ester residue per g-atom of titanium in place of the acetylacetonate residue, with the malonic acid dialkyl ester residue being derived from malonic acid dialkyl esters of the formula ROOC-CR'R'-COOH in which R stands for like or unlike alkyl residues with 1 to 4 C-atoms and R' for H or R.

2. Process for the preparation of dialkyl-titanium (IV) acetylacetonates according to claim 1, characterised in that tetraalkyltitanates are reacted with so much acetylacetone and malonic acid dialkyl esters of the formula ROOC-CR'R'-COOH, in which R stands for like or different alkyl residues with 1 to 4 C-atoms and R' for H or R, that 1.25 to 1.95, preferably 1.5 to 1.75 mol of acetylacetone and 0.75 to 0.05, preferably 0.5 to 0.25 mol of malonic acid dialkyl ester are employed per g-atom of titanium and the sum of the number of moles of acetylacetone and the number of moles of malonic acid-dialkyl ester amounts to 2 mols per g-atom of titanium.

## Revendications

1. Acétylacétonates de dialcoxytitane (IV), caractérisés en ce qu'ils renferment, par atome-g de titane, 0,05 à 0,75 mole d'un reste malonate de dialkyle à la place du reste acétylacétonate, le reste malonate de dialkyle dérivant de malonates de dialkyle de formule ROOC-CR'R'-COOR dans laquelle R représente des restes alkyles identiques ou différents avec 1 à 4 atomes de C et R' représente H ou R.

2. Procédé de préparation d'acétylacétonates de dialcoxytitane (IV) selon la revendication 1, caractérisé en ce que l'on fait réagir des titanates de tétraalkyle avec une quantité telle d'acétylacétone et de malonates de dialkyle de formule ROOC-CR'R'-COOR où R représente des restes alkyles identiques ou différents avec 1 à 4 atomes de C et R' représente H ou R que l'on introduit, par atome-g de titane, 1,25 à 1,95, de préférence 1,5 à 1,75 moles d'acétylacétone et 0,75 à 0,05, de préférence 0,5 à 0,25 mole de malonate de dialkyle et que la somme du nombre de moles d'acétylacétone et du nombre de moles de malonate de dialkyle s'élève à 2 moles par atome-g de titane.